(19) **Europäisches Patentamt**

**European Patent Office**

**Office européen des brevets**

(11) **EP 0 845 469 A2**

(12) **EUROPÄISCHE PATENTANMELDUNG**

(43) Veröffentlichungstag:
03.06.1998 Patentblatt 1998/23

(51) Int. Cl.⁶: C07F 7/18

(21) Anmeldenummer: 97117094.9

(22) Anmeldetag: 02.10.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 27.11.1996 DE 19649027

(71) Anmelder:
HÜLS AKTIENGESELLSCHAFT
45764 Marl (DE)

(72) Erfinder:
• Horn, Michael, Dr.
79618 Rheinfelden (DE)
• Frings, Albert-Johannes, Dr.
79618 Rheinfelden (DE)
• Jenkner, Peter, Dr.
79618 Rheinfelden (DE)
• Monkiewicz, Jarowslaw, Dr.
79618 Rheinfelden (DE)
• Seiler, Claus-Dietrich, Dr.
79618 Rheinfelden (DE)
• Standke, Burkhard, Dr.
79540 Lörrach (DE)
• Trautvetter, Bertram
79618 Rheinfelden (DE)

(54) **Verfahren zur Herstellung von Organocarbonoyloxysilanen**

(57) Die vorliegende Erfindung betrifft ein Verfahren zur Herstellung von Organocarbonoyloxysilanen durch Umsetzung von Organochlorsilanen mit einer Carbonsäure und Carbonsäureanhydrid in Gegenwart eines Katalysators, wobei man in einem ersten Reaktionsschritt das Organochlorsilan mit einer Carbonsäure umsetzt, den entstandenen Anteil an Chlorwasserstoff im wesentlichen abführt, das verbleibende Reaktionsgemisch in einem zweiten Reaktionsschritt mit dem Carbonsäureanhydrid umsetzt und das resultierende Produktgemisch aufarbeitet.

**Beschreibung**

Die Erfindung betrifft ein Verfahren zur Herstellung von Organocarbonoyloxysilanen.

Carbonoyloxysilane haben vielseitige Anwendung in der chemischen Industrie gefunden. Sie eignen sich z. B. als vernetzende Siliziumverbindungen bei der Herstellung unter Ausschluß von Wasser lagerfähiger und bei Zutritt von Feuchtigkeit bei Raumtemperatur härtbarer Massen. Beispiele dafür sind Verbindungen wie Methyl-, Ethyl- und Propyl-tris(ethanoyloxy)silan.

Für derartige Silane sowie deren Herstellverfahren sind in neuerer Zeit die Anforderungen hinsichtlich Wirtschaftlichkeit und Reinheit der Produkte, auch bezüglich der Restchlorgehalte, extrem angestiegen.

Für die Herstellung von Carbonoyloxysilanen in technisch-wirtschaftlichen Maßstäben finden im wesentlichen zwei Verfahrensweisen Anwendung.

Die eine Verfahrensweise bedient sich der Umsetzung von Organochlorsilanen mit Carbonsäuren zu den entsprechenden Organocarbonoyloxysilanen. Diese Verfahrensweise wird sowohl diskontinuierlich als auch kontinuierlich praktiziert. Die diskontinuierliche Herstellung erfordert die Gegenwart eines inerten Lösungsmittels und lange Reaktionszeiten, um die Restgehalte an acidem Chlor auf Werte unter 100 ppm abzusenken (US-PS 2 437 073, US-PS 2 866 800, US-PS 3 974 198, GB 814 011). Kontinuierliche Umsetzungen von Organochlorsilanen mit Carbonsäuren werden in den Schriften DE-PS 2 801 780, DE-PS 3 221 702, EP-OS 0 003 317, US-PS 4 332 956, US-PS 4 329 484, offenbart. Bei Anwendung geringer Carbonsäureüberschüsse, bezogen auf die eingesetzten Organochlorsilan-Mengen, verbleiben Gehalte an acidem Chlor in Größenordnungen von bis zu 50 ppm; erst die Anwendung großer Carbonsäureüberschüsse - in der Größenordnung von 50 % - ermöglicht die Herabsetzung der Gehalte an acidem Chlor auf Werte kleiner 1 ppm bei zu tolerierenden Siloxangehalten.

Die Verfahrensweise zur Herstellung von Carbonoyloxysilanen im technischen Maßstab, bei der die Carbonsäure als solche eingesetzt wird, ist im allgemeinen weniger wirtschaftlich als die andere Verfahrensweise, die sich der Umsetzung von Organochlorsilan mit Carbonsäureanhydriden zum Organocarbonoyloxysilan unter gleichzeitiger Bildung des entsprechenden Carbonsäurechlorids bedient. Der Ursache hierfür liegt im wesentlichen bei den in der Regel höheren Erstehungs- bzw. Einsatzstoffkosten für die Carbonsäure im Vergleich zum entsprechenden Carbonsäureanhydrid.

In der FR-PS 1 003 073 wird die diskontinuierliche und gleichzeitige Herstellung von Carbonoyloxysilanen und Carbonsäurechloriden durch Umsetzung von Organochlorsilanen mit Monocarbonsäureanhydriden beschrieben.

Eine kontinuierliche Herstellweise von Carbonoyloxysilanen wird in der EP-PS 0 509 213 offenbart, wobei Organochlorsilane mit Carbonsäureanhydriden in Gegenwart von speziellen Katalysatoren zu Carbonoyloxysilanen und Carbonoylchloriden umgesetzt werden. Die spezielle Verfahrensweise ermöglicht es den Gehalt an acidem Chlor in den Endprodukten von z. B. 800 ppm auf 3 ppm herabzusetzen.

Vorteilhaft sind bei den Verfahren, bei denen das Carbonsäureanhydrid eingesetzt wird, zwar die günstigeren Einsatzstoffkosten gegenüber Verfahren, bei denen eine Monocarbonsäure eingesetzt wird, z. B. Essigsäureanhydrid im Vergleich zu Essigsäure, jedoch ist es nicht zu gewährleisten, daß das als Nebenprodukt entstehende Carbonsäurechlorid auch in Mengen entsprechend dem Hauptprodukt im Markt absetzbar ist, dadurch kann der wirtschaftliche Vorteil günstiger Einsatzstoffkosten rasch aufgezehrt sein.

In der Literatur werden auch Verfahrensweisen der Herstellung von Carbonoyloxysilanen durch Umsetzung entsprechender Organochlorsilane mit Alkalicarbonoyloxiden in Gegenwart von großen Mengen an inerten Verdünnungsmitteln beschrieben. Diese Verfahrensweisen sind mit dem Anfall von erheblichen Salzmengen verbunden, wobei das Zielprodukt durch aufwendige Waschprozesse aus dem Reaktionsgemisch entfernt werden muß. Diese Verfahrensweisen sind technisch wenig praktikabel und genügen auch nicht den heutigen ökonomischen und ökologischen Anforderungen (US-PS 2 573 302, GB- PS 640 834, DE-PS 870 554, US-PS 2 537 073, US-PS 2 866 800).

Der vorliegenden Erfindung lag daher die Aufgabe zugrunde, ein im wesentlichen wirtschaftliches Verfahren zur Herstellung von Organocarbonoyloxysilanen bereitzustellen. Ein besonderes Anliegen der vorliegenden Erfindung war es, auch anfallende Mengen entsprechender Carbonsäurechloride zu nutzen.

Die gestellte Aufgabe wird erfindungsgemäß entsprechend den Angaben der Patentansprüche gelöst.

Überraschenderweise wurde nun gefunden, daß es in einfacher und wirtschaftlicher Weise möglich ist, Organocarbonoyloxysilane durch Umsetzung von Organochlorsilanen mit einer Carbonsäure und einem Carbonsäureanhydrid in Gegenwart eines Katalysators herzustellen, wobei man in einem ersten Reaktionsschritt das Organochlorsilan mit der Carbonsäure umsetzt, den entstandenen Anteil an Chlorwasserstoff im wesentlichen abführt, das verbleibende Reaktionsgemisch in einem zweiten Reaktionsschritt mit dem Carbonsäureanhydrid umsetzt und das resultierende Produktgemisch aufarbeitet.

Gegenstand der vorliegenden Erfindung ist daher ein Verfahren zur Herstellung von Organocarbonoyloxysilanen durch Umsetzung von Organochlorsilanen mit einer Carbonsäure und Carbonsäureanhydrid in Gegenwart eines Katalysators, wobei man in einem ersten Reaktionsschritt das Organochlorsilan mit einer Carbonsäure umsetzt, den entstandenen Anteil an Chlorwasserstoff im wesentlichen abführt, das verbleibende Reaktionsgemisch in einem zweiten Reaktionsschritt mit dem Carbonsäureanhydrid umsetzt und das resultierende Produktgemisch aufarbeitet.

Vorzugsweise führt man beim erfindungsgemäßen Verfahren den ersten und/oder zweiten Reaktionsschritt in Gegenwart eines inerten Verdünnungsmittels durch. Als geeignete Verdünnungsmittel kann man beispielsweise Pentan, Hexan, Benzol, Toluol sowie Trichlorethylen einsetzen.

Ferner führt man beim erfindungsgemäßen Verfahren den ersten und/oder zweiten Reaktionschritt geeigneterweise in Gegenwart mindestens eines Katalysators durch. Vorzugsweise setzt man hierzu einen stickstoffhaltigen Katalysator, besonders vorzugsweise ein Carbonsäureamid, ein, so z. B. N,N-Dimethylformamid. Bezogen auf die beim erfindungsgemäßen Verfahren eingesetzte Menge an Organochlorsilan, setzt man den Katalysator vorzugsweise in einer Menge bis 500 Gew.-ppm, besonders vorzugsweise in Mengen von 20 bis 100 Gew.-ppm, ein.

Bei der Durchführung des erfindungsgemäßen Verfahrens setzt man beim ersten Reaktionsschritt vorzugsweise die Hälfte des im Organochlorsilan vorliegenden Chlors mit der entsprechenden stöchiometrischen Menge an Carbonsäure um. Beim zweiten Reaktionsschritt legt man bevorzugt Carbonsäureanhydrid vor, gibt das im ersten Reaktionschritt erhaltene Reaktionsgemisch hinzu und führt den zweiten Reaktionschritt geeigneterweise unter stetiger Entfernung des sich bildenden Carbonsäurechlorids zu Ende. Man kann aber auch das Reaktionsgemisch aus dem ersten Reaktionsschritt vorlegen und das Carbonsäureanhydrid zugeben. Bevorzugt erfolgt die Aufarbeitung des Produktgemisches, d. h. im wesentlichen die Entfernung des in dem zweiten Reaktionsschritt entstehenden Carbonsäurechlorids, durch Destillationsmaßnahmen.

In der Regel führt man den ersten und/oder zweiten Reaktionsschritt des erfindungsgemäßen Verfahrens bei einer Temperatur im Bereich von 50 bis 110 °C durch. Um eine bessere Durchmischung der Reaktionsgemische zu erzielen, können der erste und/oder zweite Reaktionsschritt unter Rühren durchgeführt werden. Die erfindungsgemäßen Umsetzungen werden im allgemeinen unter Normaldruck durchgeführt, diese kann man aber auch unter vermindertem Druck oder Druckerhöhung durchführen. Geeigneterweise führt man beim erfindungsgemäßen Verfahren die Aufarbeitung des aus dem zweiten Reaktionsschritt resultierenden Produktgemisches unter vermindertem Druck durch, bevorzugt werden Drücke zwischen 1 000 und 5 mbar.

Vorzugsweise setzt man beim erfindungsgemäßen Verfahren das Carbonsäureanhydrid in der Menge ein, daß die bei der Aufarbeitung des Produktgemisches anfallende Menge an Carbonsäurechlorid nach einer Hydrolyse mit Wasser und der Entfernung des entstandenen Chlorwasserstoffs geeigneterweise weider als Carbonsäure im ersten Reaktionsschritt des erfindungsgemäßen Verfahrens eingesetzt werden kann.

Beim erfindungsgemäßen Verfahren setzt man insbesondere Vinyl-, Methyl-, Ethyl-, Propyl- oder Phenyltrichlorsilane, Dimethyldichlorsilan sowie 2-Chlorethyl-methyldichlorsilane ein.

Die nach dem erfindungsgemäßen Verfahren erhältlichen Carbonoyloxysilane entsprechen der allgemeinen Formel

$$R^1_a R^2_b \, Si(\text{-O-CO-}R^3)_{4\text{-a-b}} \, ,$$

wobei a den Wert 3, 2 oder 1 und
b den Wert 1 oder 0 annehmen können und a + b ≤ 3 sind;
bevorzugt werden solche mit a = 1 und b = 0.

$R^1$ sowie $R^2$ stehen hier geeigneterweise für Wasserstoff bzw. gesättigte oder ungesättigte Kohlenwasserstoff-Reste mit jeweils 1 bis 10 C-Atomen die ggf. funktionelle Gruppen, z. B. Halogen, besitzen können, die unter den gegebenen Reaktionsbedingungen nicht angegriffen werden, sowie für cyclische gesättigte oder ungesättigte Kohlenwasserstoff-Reste mit 6 C-Atomen. $R^1$ und $R^2$ können in der vorliegenden Formel gleich oder verschieden sein $R^3$ steht in der zuvor genannten Formel insbesondere für einen Wasserstoff-, Methyl-, Ethyl- oder Propyl-Rest.

Besonders bevorzugt werden nach dem erfindungsgemäßen Verfahren folgende Verbindungen hergestellt:

Vinyl-tris(ethanoyloxy)silan, Ethyl-tris(ethanoyloxy)silan,
Methyl-tris(ethanoyloxy)silan, Propyl-tris(ethanoyloxy)silan,
Dimethyl-bis(ethanoyloxy)silan sowie
Phenyl-tris(ethanoyloxy)silan.

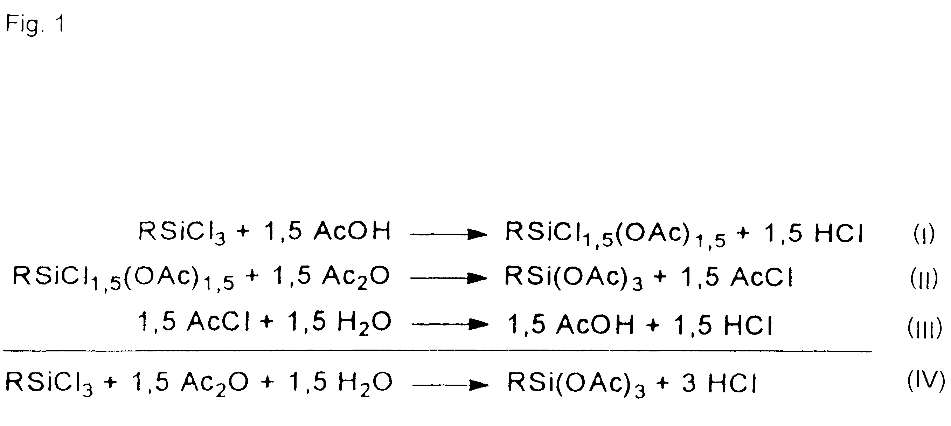

Figur 1 zeigt ein bevorzugtes Gleichungsschema des erfindungsgemäßen Verfahrens: Gemäß Reaktionsgleichung (I) erfolgt in einem ersten Schritt die Umsetzung eines Organochlorsilans mit Essigsäure unter Abführung von Chlorwasserstoff. In einem zweiten Schritt, vgl. Reaktionsgleichung (II), erfolgt die Umsetzung des vorliegenden Reaktionsgemisches der ersten Stufe mit Essigsäureanhydrid unter Produktbildung und dem Anfall von Acetylchlorid als Nebenprodukt, das geeigneterweise vom Produkt getrennt wird. Bevorzugt erfolgt dann eine Hydrolyse des vorliegenden Acetylchlorids und Rückführung der Carbonsäure in den Prozeß, vgl. Reaktionsgleichungen (III) und (I). Aus der Summengleichung (IV) wird zusätzlich deutlich, daß das erfindungsgemäße Verfahren in dieser bevorzugten Ausführungsform durch den Einsatz des Carbonsäureanhydrids unter Hinzunahme von Wasser eine besonders wirtschaftliche Betriebsweise ermöglicht und die Absatzsituation der anfallenden Carbonsäurechloridmenge durch die Wiederverwendung im Prozeß fortan kein unabdingbares Hindernis mehr darstellt.

Ferner kann man Restgehalte an acidem Chlor, wie in zwei parallel beim Deutschen Patentamt eingereichten Anmeldungen offenbart ("Verfahren zur Entfernung von Restmengen an acidem Chlor in Carbonoyloxysilanen" und "Verfahren zur kontinuierlichen Herstellung von Carbonoyloxysilanen"), durch ggf. stufenweise Zugabe von Metallcarbonyloxiden und Abtrennen der gebildeten Metallchloride aus erfindungsgemäß erhältlichen Carbonoyloxysilanen im wesentlichen entfernen, dabei werden insbesondere Werte von deutlich weniger als 1 Gew.-ppm Cl erreicht, und es fallen hierbei nur vergleichsweise geringe Mengen Metallsalze an.

Darüber hinaus sind beim erfindungsgemäßen Verfahren keine nennenswerten Mengen an Lösemittel erforderlich. Des weiteren kann man das erfindungsgemäße Verfahren oder Teilschritte des Verfahrens kontinuierlich durchführen.

Die Erfindung wird durch die nachfolgenden Beispiele näher erläutert:

## Beispiele

### Beispiel 1

In einem Standard-Glasreaktor von 2 l Inhalt mit Magnetrührer, einem Tropftrichter, einem Wasserkühler und einem über einen Kryomaten auf -40 °C gekühlten Wärmetauscher werden 800 g (4,5 mol) n-Propytrichlorsilan, 350 g Hexan und 0,1 ml N,N-Dimethylformamid vorgelegt. Man heizt die Reaktionsmischung in einem Ölbad von 100°C auf und beginnt bei 60 °C Innentemperatur mit dem Dosieren von 402 g (6,7 mol) Essigsaure. Der freiwerdende Chlorwasserstoff wird über die Kühlerkombination abgeführt. Die Zugabe ist nach 90 Minuten beendet, worauf die Temperatur des Heizbades auf 80 °C zurückgenommen wird. Man kocht noch etwa 1 Stunde nach und kühlt anschließend auf 30 °C ab.
In einer zweiten Apparatur, bestehend aus einem 2 l-Kolben mit Magnetrührer, einer 80 cm-Kolonne von 25 mm Durchmesser, gefüllt mit Keramik-Sattelkörpern, und einer Kühlerkombination, wie beim ersten Reaktor beschrieben, sowie einem Tropftrichter, werden 1150 g (11,3 mol) Essigsäureanhydrid bei 65 °C vorgelegt. Über den Tropftrichter werden nun unter fortgesetztem Rühren und Heizen mit einem auf 80 °C einregulierten Ölbad zunächst ca. 30 % der im ersten Reaktionsschritt erhaltenen Mischung zugegeben. Das sich bildende Acetylchlorid wird abdestilliert und in einer eisgekühlten Vorlage aufgefangen. Synchron wird weitere Reaktionsmischung zudosiert. Die Destillationsgeschwindigkeit läßt während dieser Phase nach, worauf die Destillationsvorlage entleert und der Anlagendruck mit einer Wasserstrahlpumpe bis zuletzt 200 mbar abgesenkt wird. Nach einem weiteren Fraktionswechsel zieht man den Anlagendruck weiter bis auf 35 mbar herunter, bis die Destillation zum Erliegen kommt. Der Kolbeninhalt wird jetzt auf Umgebungstemperatur abgekühlt.
Man entnimmt eine Probe, die gaschromatographisch und auf acides Chlor untersucht wird. Man findet Restgehalte von 9,5 % Essigsäureanhydrid und 135 ppm acidem Chlor.

Die Auswaagen aus der Destillation werden zu 350 g wieder einsetzbarem Essigsäureanhydrid und 878 g eines Hexan/Acetylchlorid-Gemisches, das nach der hydrolysierenden Aufarbeitung 402 g Essigsäure und 340 g Hexan liefert, bestimmt Die 80 cm-Kolonne wird gegen eine von 15 cm Länge getauscht und die Destillation unter Nutzung einer Ölvakuumpumpe fortgesetzt. Als Fraktionen werden 104 g Essigsäureanhydrid und 1080 g n-Propyltriacetoxysilan neben 30 g Destillationsrückstand erhalten. Das n-Propyltriacetoxysilan enthält neben etwa 1,5 % Oligomeren noch 15 mg/kg acides Chlor.

### Beispiel 2

Es wird die Apparatur genutzt, wie sie im Beispiel 1 erläutert ist. Zur Reaktion gelangen 700 g (4,7 mol) Methyltrichlorsilan in 350 g Hexan und 420 g (7,0 mol) Essigsäure. Die Heiztemperatur ist in dieser ersten Stufe auf 90 °C begrenzt und die Dosierzeit auf 120 Minuten verlängert.

Für die zweite Stufe werden 1200 g (11,8 mol) Essigsäureanhydrid vorgelegt, und man erhält bei einer Reaktionsweise wie in Beispiel 1 beschrieben ein Rohprodukt mit 8% Essigsäureanhydrid und 90 mg/kg acidem Chlor. Die Destillate ergeben sich zu 375 g Essigsäureanhydrid und 920 g Hexan/Acetylchlorid. Letzteres liefert nach Hydrolyse und Destillation 420 g Essigsäure und 340 g Hexan.

Aus der Feindestillation werden 82 g Essigsäureanhydrid, 985 g Methyltriacetoxysilan und 30 g Destillationsrückstand erhalten.

### Beispiel 3

Für einen Ansatz im technischen Maßstab wird eine Anlage benutzt, die aus einem 2.000 l-Reaktor mit Rührer, Kondensatoren und Vorlagen, sowie einem weiteren 2.000 l-Reaktor mit Rührer, Destillationskolonne mit Destillatvorlagen und einer Vakuumeinrichtung besteht.

In den ersten Reaktor werden 800 kg (4,9 kmol) Ethyltrichlorsilan, 350 kg Hexan und 50 ml N,N-Dimethylformamid vorgelegt. Bei Siedetemperatur des Hexans dosiert man innerhalb von 3 Stunden 438 kg (7,3 kmol) Essigsäure zu und kocht noch 2 Stunden nach. Der freiwerdende Chlorwasserstoff wird abgeführt.
Eine im Anschluß genommene und gaschromatographisch vermessene Probe zeigt, daß der Rest-Essigsäure-Gehalt unter 1% liegt. Der Anteil an Siloxanen wird ebenfalls zu etwa 1 % angezeigt.

Der zweite Reaktor ist beschickt mit 1250 kg (12,2 kmol) Essigsäureanhydrid und auf 65 °C aufgeheizt. Hier hinein gibt man zunächst etwa ein Drittel der Reaktionsmischung aus dem ersten Reaktor und erhöht die Temperatur, bis am Kopf der Kolonne Acetylchlorid abdestilliert. Zu diesem Zeitpunkt wird begonnen, aus dem ersten Reaktor weiter Reaktionsmischung zuzufahren. Die Heizung wird dabei dem Reaktionsfortschritt entsprechend erhöht, bis 90 °C Sumpftemperatur erreicht sind. Dann erniedrigt man den Druck soweit, bis nach Ende der Dosierung nur noch der Essigsäureanhydrid-Überschuß zur Abnahme ansteht. Dieser Anhydrid-Überschuß wird ebenfalls unter vermindertem Druck bei maximal 90 °C Sumpftemperatur abgenommen.

Am Ende der Reaktion erhält man 1202 kg rohes Ethyltriacetoxysilan, das etwa 5 % Essigsäureanhydrid enthält, etwa 922 kg eines Gemisches aus Acetylchlorid und Hexan und 437 kg rückgewonnenes Essigsäureanhydrid, das beim nächsten Ansatz wieder eingesetzt wird.

Das Acetylchlorid/Hexan-Gemisch wird einer hydrolytischen Aufarbeitung unterzogen und das Hexan von der dabei entstandenen Essigsäure destillativ getrennt. Man erhält 438 kg Essigsäure und 344 kg Hexan zurück.

Die erhaltenen Destillate Hexan, Essigsäure und Essigsäureanhydrid können ohne weitere Reinigung wieder in den Prozeß zurückgeführt werden.

Bei der Feindestillation werden 1110 kg Ethyltriacetoxysilan, 57 kg Essigsäureanhydrid und 35 kg Destillationsrückstand erhalten. Das Ethyltriacetoxysilan fällt mit einem Gehalt an acidem Chlorid von <10 ppm an.

**Beispiel 4**

Es wird in einen, Ansatz Ethyltriacetoxysilan hergestellt, wie in Beispiel 3 beschrieben, und vor der Feindestillation der Gehalt an acidem Chlor zu 54 mg/kg bestimmt, daraufhin werden 150 g Natriumacetat als Suspension in 700 ml Essigsäureanhydrid hinzugefügt und fraktionierend destilliert. Die erhaltenen Mengen an Destillat bleiben praktisch unverändert, jedoch ergibt die Bestimmung des aciden Chlors im Produkt des Hauptlaufs einen Wert von < 2 mg/kg.

**Patentansprüche**

1. Verfahren zur Herstellung von Organocarbonoyloxysilanen durch Umsetzung von Organochlorsilanen mit einer Carbonsäure und einem Carbonsäureanhydrid in Gegenwart eines Katalysators, wobei man in einem ersten Reaktionsschritt das Organochlorsilan mit einer Carbonsäure umsetzt, den entstandenen Anteil an Chlorwasserstoff im wesentlichen abführt, das verbleibende Reaktionsgemisch in einem zweiten Reaktionsschritt mit dem Carbonsäureanhydrid umsetzt und das resultierende Produktgemisch aufarbeitet.

2. Verfahren nach Anspruch 1, dadurch gekennzeichnet,

daß man den ersten und/oder zweiten Reaktionsschritt in Gegenwart eines inerten Verdünnungsmittels durchführt.

3. Verfahren nach Anspruch 1 oder 2, dadurch gekennzeichnet, daß man den ersten und/oder zweiten Reaktionschritt in Gegenwart mindestens eines Katalysators durchführt.

4. Verfahren nach Anspruch 3, dadurch gekennzeichnet, man als Katalysator einen stickstoffhaltigen Katalysator einsetzt

5. Verfahren nach Anspruch 4, dadurch gekennzeichnet, daß man als Katalysator ein Carbonsäureamid einsetzt.

6. Verfahren nach mindestens einem der Ansprüche 1 bis 5, dadurch gekennzeichnet, daß man den Katalysator in einer Menge bis 500 Gew.-ppm, bezogen auf die eingesetzte Menge an Organochlorsilan, einsetzt.

7. Verfahren nach mindestens einem der Ansprüche 1 bis 6, dadurch gekennzeichnet, daß man beim ersten Reaktionsschritt die Hälfte des im Organochlorsilan vorliegenden Chlors mit der entsprechenden stöchiometrischen Menge an Carbonsäure umsetzt.

8. Verfahren nach mindestens einem der Ansprüche 1 bis 7, dadurch gekennzeichnet, daß man beim zweiten Reaktionsschritt Carbonsäureanhydrid vorlegt, das im ersten Reaktionschritt erhaltene Reaktionsgemisch hinzugibt und den zweiten Reaktionschritt unter stetiger Entfernung des sich bildenden Carbonsäurechlorids zu Ende führt.

9. Verfahren nach mindestens einem der Ansprüche 1 bis 8, dadurch gekennzeichnet, daß man das Carbonsäureanhydrid beim zweiten Reaktionsschritt in der Menge einsetzt, wie die beim zweiten Reaktionsschritt anfallende Menge an Carbonsäurechlorid nach einer Hydrolyse mit Wasser und dem Entfernen des entstandenen Chlorwasserstoffs als Carbonsäure beim ersten Reaktionsschritt wieder einsetzbar ist.

10. Verfahren nach mindestens einem der Ansprüche 1 bis 9,

dadurch gekennzeichnet,
man das Verfahren oder Teilschritte des Verfahrens
kontinuierlich durchführt.

EP 0 845 469 A2

Fig. 1

$$RSiCl_3 + 1,5 \; AcOH \longrightarrow RSiCl_{1,5}(OAc)_{1,5} + 1,5 \; HCl \quad (I)$$

$$RSiCl_{1,5}(OAc)_{1,5} + 1,5 \; Ac_2O \longrightarrow RSi(OAc)_3 + 1,5 \; AcCl \quad (II)$$

$$1,5 \; AcCl + 1,5 \; H_2O \longrightarrow 1,5 \; AcOH + 1,5 \; HCl \quad (III)$$

$$RSiCl_3 + 1,5 \; Ac_2O + 1,5 \; H_2O \longrightarrow RSi(OAc)_3 + 3 \; HCl \quad (IV)$$